(19) Europäisches Patentamt
European Patent Office
Office européen des brevets

(11) **EP 0 754 955 A1**

(12) **DEMANDE DE BREVET EUROPEEN**

(43) Date de publication:
**22.01.1997 Bulletin 1997/04**

(51) Int Cl.6: **G01S 3/784**

(21) Numéro de dépôt: **96810425.7**

(22) Date de dépôt: **26.06.1996**

(84) Etats contractants désignés:
**AT BE DE ES FR GB IT NL SE**

(30) Priorité: **19.07.1995 CH 2125/95**

(71) Demandeurs:
• **OPTOSYS AG**
**1752 Villars-sur-Glâne (CH)**
• **Rheme, Charles**
**1725 Posieux (CH)**

(72) Inventeur: **Rhême, Charles**
**1725 Posieux (CH)**

(74) Mandataire:
**AMMANN INGENIEURS-CONSEILS EN**
**PROPRIETE INTELLECTUELLE SA BERNE**
**Schwarztorstrasse 31**
**3001 Bern (CH)**

(54) **Procédé de mesure différentielle de l'angle d'incidence d'un faisceau lumineux et dispositif de mesure pour la mise en oeuvre du procédé**

(57)    Dans le procédé de mesure différentielle d'un angle d'incidence d'un faisceau lumineux l'on emploie le faisceau lumineux (10) polarisé que l'on fait passer deux fois à traver une lame biréfringente (12) suivie d'un polariseur analyseur (11) pour obtenir une succession de franges d'interférence et l'on analyse à l'aide d'un détecteur approprié (15) et d'un circuit électronique d'analyse, l'orientation ou l'écart entre les crêtes desdites franges, ceux-ci étant une fonction directe de l'angle ($\gamma$) à mesurer.

Le dispositif de mesure comprend un seul pola-riseur analyseur (11), une lame biréfringente (12) suivie d'un miroir (13) pour renvoyer le faisceau lumineux (10) une seconde fois à travers la lame biréfringente (12) et un détecteur des variations de l'intensité lumineuse (15) avec un circuit électronique d'analyse.

L'emploi d'une double traversée d'une lame biréfringente permet d'ajuster les éléments optiques dans un plan (V) pour optimaliser le rendement et la sensibilité, et de mesurer dans l'autre plan (H) pour obtenir un dispositif à la fois simple et très sensible aux déplacements angulaires pour mesurer, p.ex. des vibrations.

FIG. 6A

FIG. 6B

## Description

Il existe un grand nombre de procédés et/ou dispositifs pour mesurer par voie optique un angle d'incidence d'un faisceau lumineux, par exemple celui divulgué par le brevet US-A-4,626,100, qui décrit un appareil de mesure à champ de vision large pour détecter la position angulaire d'un laser éloigné. Ce dispositif, comprenant des prismes Wollaston et cherchant à perfectionner des mesures à grande précision, est très compliqué. Il nécessite de nombreux éléments optiques de précision et de cristaux biréfringents taillés selon des angles et des épaisseurs identiques et un alignement rigoureux de ces éléments est indispensable au bon fonctionnement de cet appareil.

Sont également connus, par le brevet US-A-5,182,612 du même demandeur, un procédé et un dispositif de mesure par voie optique en utilisant un faisceau lumineux polarisé que l'on fait passer à travers une lame biréfringente suivie d'un polarisateur analyseur pour obtenir une succession de franges d'interférences, où l'écart entre deux crêtes desdites franges d'interférences sont une fonction directe de l'angle à mesurer.

Le deuxième brevet U.S cité décrit déjà un procédé et un dispositif nettement simplifiés par rapport à ceux de l'état de la technique connu alors. Toutefois, l'utilisation d'une seule lame biréfringente donnant une répartition conique du faisceau et avec cela des franges d'interférences courbées nécessite un appareil de détection et une électronique d'évaluation poussée, et possède une sensibilité limitée.

Partant de cet état de la technique connu, un objet de l'invention est de fournir un procédé de mesure d'un angle d'incidence d'un faisceau lumineux encore plus simple et plus sensible, permettant la construction d'un dispositif sensible dont l'encombrement est réduit par rapport aux dispositifs connus.

L'invention sera expliquée en détail en se référant aux dessins ci-annexés présentant à titre d'exemple une forme d'exécution de l'objet de l'invention.

La fig. 1            montre schématiquement une lame biréfringente,

la fig. 2            montre la variation de l'indice extraordinaire en fonction de l'angle d'incidence,

la fig. 3            montre la séparation d'une onde lumineuse en deux rayons,

la fig. 4            montre schématiquement la dépendance de l'écart des franges d'interférence de l'angle à mesurer,

les fig. 5A et 5B            montrent le principe de mesure différentielle de l'angle d'incidence et

les fig. 6A et 6B            montrent le principe d'un dispositif de mesure différentielle de l'angle d'incidence selon l'invention.

En ce qui concerne le principe de mesure par une lame biréfringente, référence est explicitement faite au brevet US-5,182,612, respectivement à la demande EP-A-458 752, du même demandeur.

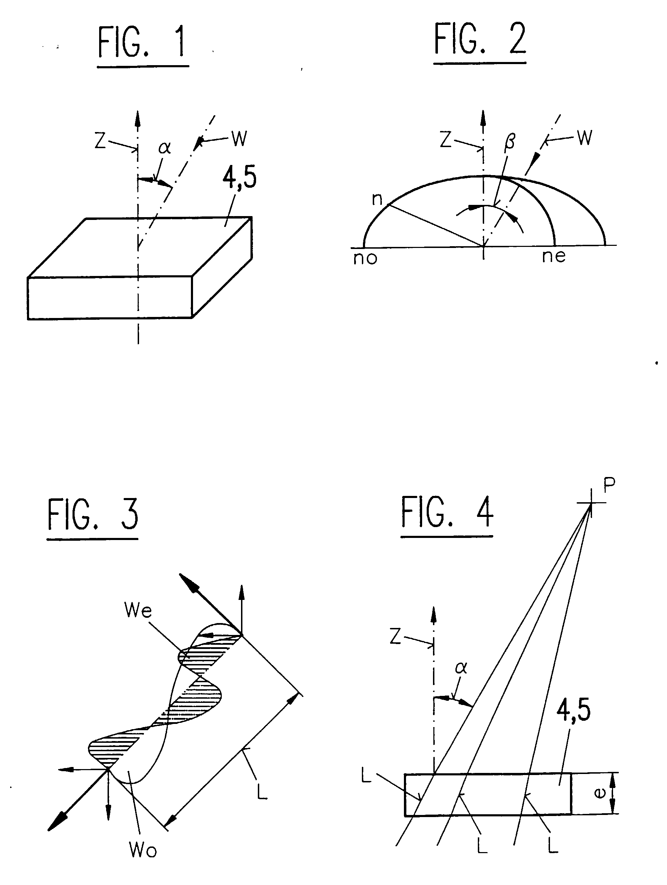

La figure 1 montre une lame biréfringente 4, 5 d'axe optique Z sur lequel le rayon lumineux tombe sous un angle d'incidence $\alpha$ que l'on veut mesurer au moyen de la présente invention. Le rayon lumineux, qui pénètre dans ce matériel sous l'angle $\beta$, est divisé, selon la polarisation, en deux rayons qui seront soumis, l'un à l'indice de réfraction ordinaire $n_o$ et l'autre à l'indice de réfraction extraordinaire n, ce dernier variant entre une valeur $n_e$ pour $\beta = 90\,°$ et la valeur correspondant à l'indice de réfraction ordinaire $n_o$. Si le premier indice est constant, le second variera en fonction de l'angle $\beta$ et on peut le calculer selon la formule suivante:

$$n = \frac{1}{\sqrt{\dfrac{\sin^2 \beta}{n_e^2} + \dfrac{\cos^2 \beta}{n_o^2}}}$$

Examinons ensuite une onde lumineuse, polarisée linéairement, qui se sépare en deux rayons ordinaires $W_o$ et extraordinaires $W_e$ se propageant à des vitesses différentes dans le matériel biréfringent (figure 3). Après un chemin produisant un déphasage relatif d'une demi-longueur d'onde entre $\omega_e$, nous constatons que le plan de polarisation de l'onde recomposée à subi une rotation de 90 °, comme cela ressort schématiquement de la figure 3. La longueur L de ce chemin est appelée lame demi-onde; elle vaudra:

$$L = \frac{\lambda}{2 \cdot n_o \cdot |n_o - n|}$$

où $\lambda$ est la longueur d'onde de l'onde lumineuse W.

Le procédé que propose l'invention consiste à soumettre un matériel biréfringent à un faisceau de lumière polarisée. En fonction de l'angle d'incidence, les rayons lumineux vont déterminer des lames demi-ondes dans ce matériel. La longueur de ces lames diminuera très rapidement, à mesure que l'angle du rayon incident s'éloignera de l'axe optique, car la valeur de l'indice de réfraction variable se différenciera de plus en plus de l'indice ordinaire. Chaque fois que l'épaisseur du matériel correspondra à un nombre entier de lames demi-ondes, la lumière émergente aura une polarisation linéaire bien définie. Entre ces zones, la polarisation sera de nature circulaire. Par analyse de cette lumière au travers d'un polariseur linéaire ou circulaire, on observera une succession de franges d'interférence dont l'écart sera une fonction directe de l'angle à mesurer (figure 4). Si la polarisation du faisceau incident est de nature circulaire, elle deviendra linéaire après avoir parcouru un chemin équivalant à une lame quart-d'onde. Son comportement sera semblable ensuite au cas déjà décrit.

Dans la figure 4, P représente une source de lumière polarisée, Z l'axe optique, $\alpha$ l'angle d'incidence et on reconnaît la lame biréfringente 4, 5 d'une épaisseur e.

Dans le procédé selon le brevet US-5,182,612, resp. la demande EP-A-458 752, du même demandeur, le faisceau émerge de la lame biréfringente avec une répartition conique, donnant des franges d'interférences courbées, qui se sont avérées difficiles à évaluer exactement. Des expériences consécutives ont montré que les franges d'interférences peuvent être amenées à des lignes quasiment droites et la sensibilité à un déplacement de l'angle d'incidence peut être accrue si le faisceau lumineux traverse deux fois une lame biréfringente.

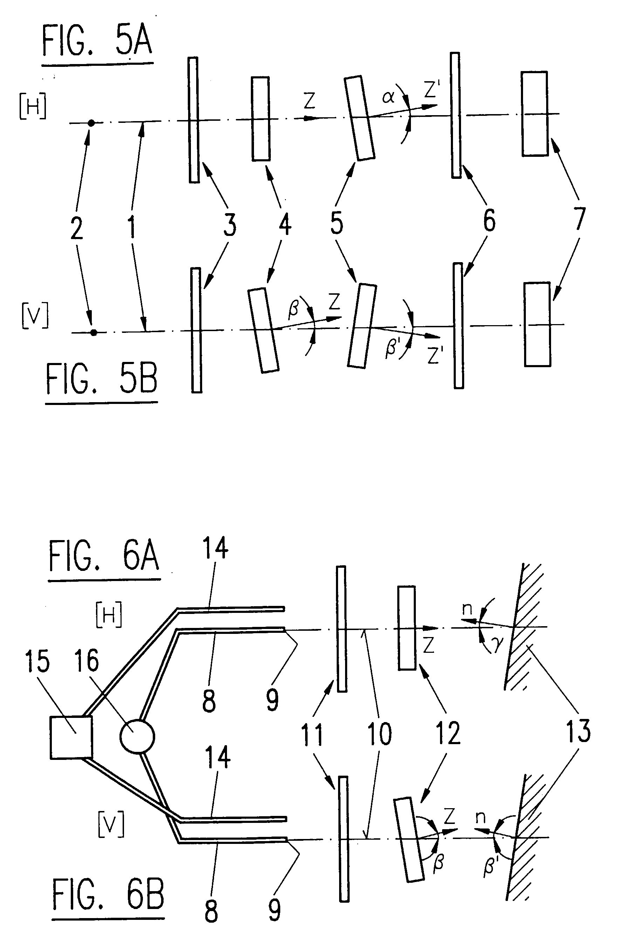

Les figures 5A et 5B montrent le principe de mesure différentielle de l'angle compris entre les axes optiques Z, Z' de deux lames biréfringentes 4, 5, à l'aide d'un faisceau lumineux provenant d'une source ponctuelle dans un plan horizontal H, figure 5A, et dans un plan vertical V, figure 5B.

Le faisceau lumineux 1, provenant de la source ponctuelle 2, qui peut être une diode luminescente, est polarisé de manière uniforme par le filtre de polarisation 3. En traversant la lame biréfringente 4, cette polarisation prendra la nature elliptique, circulaire ou linéaire selon l'angle que feront les rayons avec l'axe optique Z. Jusque-là, ce montage correspond avec l'analyseur à celui de la demande de brevet citée.

Lors de son passage dans la deuxième lame biréfringente 5, la polarisation de ce faisceau va à nouveau être modifiée spatialement en fonction de l'angle $\alpha$ formé par les rayons avec l'axe optique Z' de la deuxième lame biréfringente 5. L'analyseur 6 fera apparaître des franges d'interférences dont l'espacement dépendra des distances entre la source 2 et le système optique et entre les éléments du système optique. L'inclinaison des franges dépendra de la différence angulaire $\alpha$ entre les axes optiques Z et Z' des deux lames biréfringentes 4 et 5.

Les angles $\beta$ et $\beta'$, définis dans le plan V, seront déterminés et ajustés pour obtenir une netteté optimale des franges et pour ajuster la sensibilité à l'angle $\alpha$, défini dans le plan H. Ceci donne une information utile qui peut atteindre 20 fois l'information utile du premier dispositif connu.

La lumière sortant de l'analyseur 6 tombe sur un détecteur 7, constitué par exemple d'un photocapteur CCD, permettant à un circuit électronique d'analyser l'orientation ou l'écart des franges pour fournir l'information de mesure dans la forme souhaitée.

Ce principe de mesure permet donc d'ajuster d'une manière optimale le netteté des franges d'interférences pour une analyse optimale et en même temps d'optimaliser la sensibilité au déplacement de l'angle $\alpha$ dans l'autre plan, le déplacement de cet angle $\alpha$ correspondant au déplacement angulaire d'un objet à mesurer par rapport à l'axe optique, resp. à l'appareil de mesure.

Les figures 6A et 6B montrent très schématiquement un dispositif de mesure selon le principe de la mesure différentielle d'un angle d'incidence décrit plus haut et l'on reconnaît une fibre optique 8 dont l'extrémité 9. constitue la source ponctuelle 9 de la lumière, venant de la source de lumière 16, émettant le faisceau lumineux 10, tombant sur un filtre de polarisation et d'analyse 11. Ensuite le faisceau lumineux polarisé de manière uniforme traverse la lame biréfringente 12 pour une première fois, ce qui donnera une polarisation elliptique, circulaire ou linéaire selon l'angle que feront les rayons avec l'axe optique Z pour tomber ensuite sur un miroir 13 dont la normale n forme un angle $\gamma$ avec l'axe optique Z.

La lumière réfléchie traverse une seconde fois la lame biréfringente 12 où la polarisation de ce faisceau réfléchi va à nouveau être modifiée spatialement en fonction de l'angle $\gamma$ formé entre l'axe optique Z de la lame biréfringente 12 et la normale n au miroir 13.

Les angles $\beta$ et $\beta'$, définis dans le plan V de la figure 6B seront déterminés et ajustés pour obtenir une netteté optimale des franges d'interférences et pour ajuster la sensibilité à l'angle $\gamma$, défini dans le plan H de la figure 6A.

La fibre optique de mesure 14 collectera la lumière d'une frange et la transportera vers un détecteur 15 qui, par une mesure d'intensité, produira une information sur l'orientation de cette frange. Pour améliorer le couplage optique de la lumière avec les fibres, des éléments optiques pourront être utilisés.

Un tel dispositif de mesure sensible est avantageusement applicable pour des mesures de déplacements ou vibrations d'un objet dans un plan, les déplacements ou vibrations, resp. leurs amplitudes, livrant un signal apte à être traité ou pour surveiller le fonctionnement d'une machine. Dû à une tête de mesure uniquement optique, cette tête étant insensible aux champs magnétiques ou électriques, un tel dispositif de mesure peut être appliqué dans des environnements à conditions extrêmes.

Comme lame biréfringente il est possible d'employer un cristal liquide montrant des propriétés biréfringentes, auquel l'on applique un champ électrique variable pour obtenir une variation temporelle de son axe d'alignement. Il est aussi possible d'employer comme polariseur, outre une feuille "Polaroid" largement répandue dans le commerce, un verre doté de particules métalliques, ce verre resistant à des températures élevées.

Il est évident qu'un tel procédé de mesure, respectivement dispositif de mesure, s'applique aussi pour la mesure d'une distance entre un objet et le dispositif de mesure.

**Revendications**

1. Procédé de mesure d'un angle d'incidence d'un faisceau lumineux, caractérisé en ce que l'on emploie le faisceau lumineux (1) polarisé que l'on fait passer deux fois à travers une lame biréfringente (4, 5; 12) suivie d'un polariseur analyseur (6; 11) pour obtenir une succession de franges d'interférences et que l'on analyse à l'aide d'un détecteur approprié (7; 15) et d'un circuit électronique d'analyse l'orientation ou l'écart entre les crêtes desdites franges, ceux-ci étant une fonction directe de l'angle ($\alpha$, $\tau$) à mesurer.

2. Procédé selon la revendication 1, caractérisé en ce que l'on place un miroir (13) après la première et unique lame biréfringente (12) pour renvoyer le faisceau lumineux (10) une seconde fois à travers cette lame biréfringente (12), l'unique polariseur analyseur (11) servant à polariser le faisceau lumineux tombant sur la lame biréfringente et à polariser et analyser le faisceau lumineux réfléchi.

3. Procédé selon la revendication 1 ou 2, caractérisé en ce que l'on ajuste dans un plan (V) angulairement par rapport à l'axe optique soit une ou les deux lames biréfringentes (4, 5), soit la lame biréfringente (12) et/ou le miroir (13) pour optimaliser la netteté des franges d'interférences et que l'on mesure les déplacements angulaire ($\tau$) de l'objet à mesurer dans l'autre plan (H).

4. Procédé selon l'une des revendications 1 à 3, caractérisé en ce que l'on emploie un cristal liquide avec des propriétés biréfringentes et que l'on applique un champ électrique variable pour obtenir une variation temporelle de son axe d'alignement.

5. Procédé selon l'une des revendications 1 à 3, caractérisé en ce que l'on emploie un verre doté de particules métalliques comme polariseur, résistant à des températures élevées.

6. Dispositif de mesure pour la mise en oeuvre du procédé selon l'une des revendication 1 à 5, caractérisé par un seul polariseur analyseur (11), une lame biréfringente (12) suivie d'un miroir (13), un détecteur des variations de l'intensité lumineuse (15) avec un circuit électronique d'analyse.

7. Dispositif selon la revendication 6, caractérisé par une fibre optique (8) dont la sortie constitue la source ponctuelle (9) de la lumière et qui est reliée à une source de lumière (16) et une ou plusieurs fibres optiques de mesure (14) recevant le faisceau lumineux réfléchi et qui sont reliées aux détecteurs des variations de l'intensité lumineuse (15).

FIG. 1

FIG. 2

FIG. 3

FIG. 4

FIG. 5A

FIG. 5B

FIG. 6A

FIG. 6B

Office européen
des brevets

**RAPPORT DE RECHERCHE EUROPEENNE**

Numero de la demande

EP 96 81 0425

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | US-A-4 735 507 (CRANE JR ROBERT ET AL) 5 Avril 1988 <br> * colonne 1, ligne 57 - colonne 1, ligne 61 * <br> * colonne 3, ligne 29 - colonne 4, ligne 21 * <br> * colonne 5, ligne 66 - colonne 9, ligne 7 * <br> * colonne 13, ligne 18 - colonne 14, ligne 45; figures 1,4,5 * <br> --- | 1,2,4-6 | G01S3/784 |
| X | US-A-4 624 563 (JOHNSON JOHN L) 25 Novembre 1986 <br> * colonne 1, ligne 51 - colonne 5, ligne 17; figures 1-3 * <br> --- | 1 | |
| X | US-A-5 191 392 (JOHNSON JOHN L) 2 Mars 1993 <br> * colonne 1, ligne 20 - colonne 4, ligne 51; figure 6 * <br> --- | 1 | |
| A | US-A-3 881 105 (DE LANG HENDRIK ET AL) 29 Avril 1975 <br> * colonne 2, ligne 20 - colonne 2, ligne 63; figure 1 * <br> --- | 1,6 | **DOMAINES TECHNIQUES RECHERCHES (Int.Cl.6)** <br><br> G01S |
| A | US-A-4 682 024 (HALLDORSSON THORSTEINN ET AL) 21 Juillet 1987 <br> * colonne 4, ligne 50 - colonne 6, ligne 37; figure 3 * <br> --- | 1,6 | |
| A | US-A-3 670 168 (JOHNSTON ALAN R) 13 Juin 1972 <br> * colonne 2, ligne 71 - colonne 3, ligne 17; figure 1 * <br> --- <br><br> -/-- | 1,6 | |

Le présent rapport a été établi pour toutes les revendications

| Lieu de la recherche | Date d'achèvement de la recherche | Examinateur |
|---|---|---|
| MUNICH | 23 Octobre 1996 | Cannard, J-M |

EPO FORM 1503 03.82 (P04C02)

Office européen
des brevets

**RAPPORT DE RECHERCHE EUROPEENNE**

Numero de la demande

EP 96 81 0425

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | EP-A-0 458 752 (RHEME CHARLES) 27 Novembre 1991 <br> * colonne 2, ligne 4 - colonne 5, ligne 8; figures 1-8 * <br> ----- | 1,6 | |
| | | | **DOMAINES TECHNIQUES RECHERCHES (Int.Cl.6)** |

Le présent rapport a été établi pour toutes les revendications

| Lieu de la recherche | Date d'achèvement de la recherche | Examinateur |
|---|---|---|
| MUNICH | 23 Octobre 1996 | Cannard, J-M |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

    & : membre de la même famille, document correspondant

EPO FORM 1503 03.82 (P04C02)

8